# EUROPEAN PATENT APPLICATION

(11) **EP 3 644 026 A1**
(43) Date of publication of application: **29.04.2020**
(21) Application number: 19197442.7
(22) Date of filing: 16.09.2019
(51) Int. Cl.: G01G 19/18, G01G 23/00, B66C 1/40

(54) **A WEIGHING LINK FOR A ROTATOR**

(30) Priority: 19.10.2018 SE 1851294
(71) Applicant: Indexator Rotator Systems AB, 922 21 Vindeln (SE)
(72) Inventor: HARR, Joakim, 922 32 Vindeln (SE)
(74) Representative: Ehrner & Delmar Patentbyrå AB

(57) **Abstract**

The invention relates to a weighing link for a rotator. The weighing link 100 comprises a first part 102 and a second part 104, wherein the second part 104 is movable inside the first part 102 in an axial direction A of the weighing link 100; an electric load cell 106 arranged inside the weighing link 100 between the first part 102 and the second part 104; and a pressure means 108 is in mechanical contact with the electric load cell 106, wherein the pressure means 108 is rigidly attached to the first part 102 and movably attached to the second part 104 so that the pressure means 108 exercise an axial force F_{A} onto the electric load cell 106 when a load 300 is applied to the second part 104.

## Description

### Technical Field

The invention relates to a weighing link for a rotator.

### Background

Between a crane arm tip and a jib-carried tool, a so called rotator is often arranged so that the tool can be rotated in respect to the crane arm tip. A grapple is an example of a tool and another non-limiting example of a jib-carried tool is a harvester for harvesting trees.

Rotators comes in a number of different types and the most common are electric and hydraulic rotators. This means that the first type is electrically powered whilst the latter type is powered by hydraulic fluid. Rotators are used all over the world besides in forestry, such as in general cargo handling and material handling in ports and scrap yards.

The device holding the rotator at the crane arm is often denoted a link which e.g. can be a cardanic suspension. The link can also be a so called weighing link that can provide information about the weight of a load applied to the link.

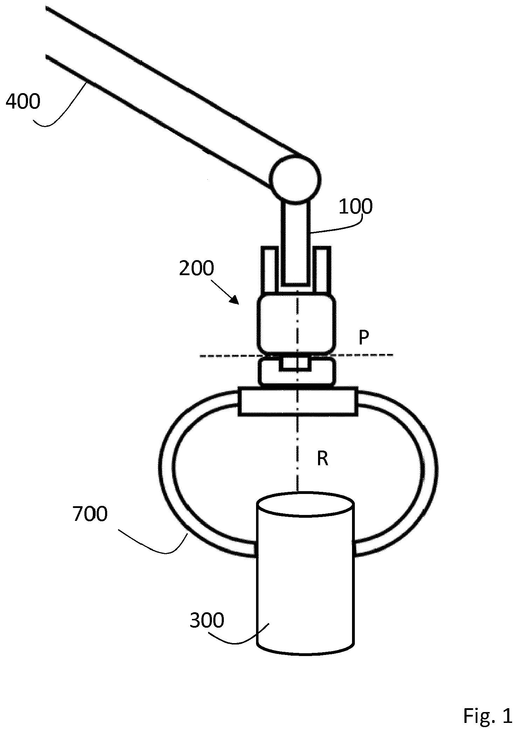

Fig. 1 shows an example of a weighing link 100 which is arranged between a crane arm 400 and a rotator 200. The rotator 200 is attached to a tool 700 in the form of a grapple. An object resulting in a load 300 is held by the grapple. The weighing link 100 is arranged to provide weight information about the weight corresponding to the load of the object. Fig. 1 also shows the rotational plane P of the rotator and the rotational axis R of the rotator.

### Summary

An objective of embodiments of the invention is to provide a solution which mitigates or solves the drawbacks and problems of conventional solutions.

The above and further objectives are solved by the subject matter of the independent claims. Further advantageous embodiments of the invention can be found in the dependent claims.

According to a first aspect of the invention, the above mentioned and other objectives are achieved with a weighing link for a rotator, the weighing link comprising
a first part and a second part, wherein the second part is movable inside the first part in an axial direction of the weighing link;
an electric load cell arranged inside the weighing link between the first part and the second part; and
a pressure means in mechanical contact with the electric load cell, wherein the pressure means is rigidly attached to the first part and movably attached to the second part so that the pressure means exercise an axial force onto the electric load cell when a load is applied to the second part.

The electric load cell can provide an electrical signal indicating the axial force which is used for determining the weight of the load. The load does not have to be directly applied on the second part but can be applied via one or more intermediate devices, such as a rotator and a tool.

An advantage of the weighing link according to the first aspect is that no solution with hydraulic fluid for weighing the load which means that the drawbacks of such solutions are not applicable to the present invention. Solutions using hydraulic fluid have e.g. drawback of leaking fluid, corrosion, arrangement of sealings, sensitive to temperature due to the properties of the fluid, and refilling of fluid with air in the fluid.

Another advantage of the weighing link according to the first aspect is that the force is directly measured by the electric load cell and not e.g. via a hydraulic fluid. This means higher accuracy for determining the weight of the applied load.

In an implementation form of a weighing link according to the first aspect, the electric load cell is arranged inside a cavity formed between the first part and the second part.

In an implementation form of a weighing link according to the first aspect, the pressure means extends in a direction perpendicular to the axial direction of the weighing link.

In an implementation form of a weighing link according to the first aspect, the direction perpendicular to the axial direction is the radial direction of the weighing link, and wherein the pressure means extends in the radial direction through the first part and the second part, respectively.

The pressure means can arranged to lock the first part to the second part so that they cannot rotate relative to each other.

In an implementation form of a weighing link according to the first aspect, further comprising a biasing device for biasing the electric load cell inside the weighing link.

In an implementation form of a weighing link according to the first aspect, the biasing device is arranged on the opposite side in the axial direction of the electric load cell in relation to the pressure means.

In an implementation form of a weighing link according to the first aspect, the biasing device comprises at least one spring arranged to act in the axial direction of the weighing link.

In an implementation form of a weighing link according to the first aspect, further comprising an overloading protection device arranged at the electric load cell for protecting the electric load cell from an overload applied to the second part.

In an implementation form of a weighing link according to the first aspect, the overloading protection device comprises at least one housing abutting the pressure means when the applied load is larger than a threshold load value.

In an implementation form of a weighing link according to the first aspect, the overloading protection device comprises a first housing and a second housing, and wherein the first housing and the second housing abut against each other when the applied load is larger than a threshold load value.

In an implementation form of a weighing link according to the first aspect, the first housing comprises a plurality of springs arranged to act in the axial direction of the weighing link.

In an implementation form of a weighing link according to the first aspect, further comprising a removable plug abutting the first housing and the first part.

In an implementation form of a weighing link according to the first aspect, the second housing comprises at least one of a bottom/base and a lid, wherein the bottom is in mechanical contact with the pressure means.

In an implementation form of a weighing link according to the first aspect, the electric load cell is connected to a signal wire extending from the electric load cell outwards in the radial direction of the weighing link.

In an implementation form of a weighing link according to the first aspect, the electric load cell is aligned with a central axis of the weighing link.

In an implementation form of a weighing link according to the first aspect,
the first part comprises a first attaching means arranged to attach the weighing link to a crane arm, and
the second part comprises a second attaching means arranged to attach the weighing link to a rotator.

According to a second aspect of the invention, the above mentioned and other objectives are achieved with an arrangement comprising a weighing link according to the first aspect and a rotator.

Further applications and advantages of the embodiments of the invention will be apparent from the following detailed description.

### Brief Description of the Drawings

The appended drawings are intended to clarify and explain different embodiments of the invention, in which:
- Fig. 1 shows an arrangement comprising a crane arm, a weighing link, a rotator and a tool holding a load;
- Fig. 2 shows an exterior view of a weighing link according to an embodiment of the invention;
- Fig. 3 shows a first cross-section view of a weighing link according to an embodiment of the invention;
- Fig. 4 shows a second cross-section view of the weighing link shown in Fig. 3;
- Fig. 5 shows a close-up view of weighing link according to an embodiment of the invention; and
- Fig. 6 illustrates the functioning of an overload protection device according to an embodiment of the invention.

### Detailed Description

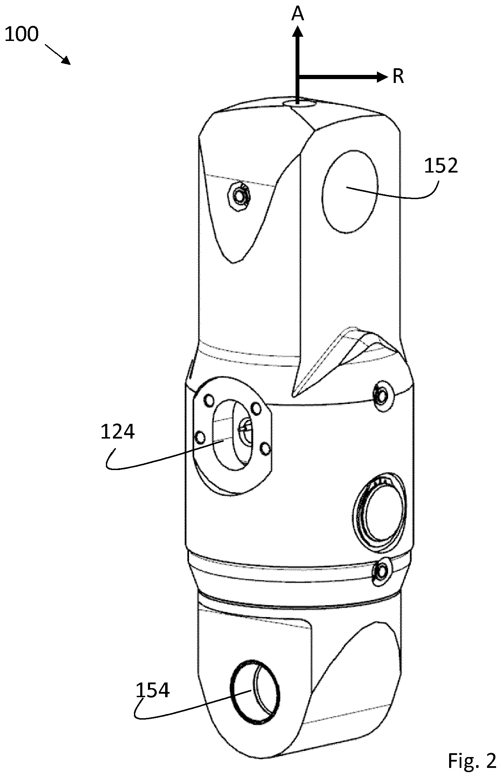

Fig. 2 shows an exterior view of a weighing link 100 according to an embodiment of the invention. As shown in Fig. 2 the first part 102 comprises a first attaching means 152 arranged to attach the weighing link 100 to a crane arm 400. Further, the second part 104 comprises a second attaching means 154 arranged to attach the weighing link 100 to a rotator 200. The attaching means is in this non-limiting example first and second through holes arranged to accommodate suitable pins so that the weighing link 100 can rotate in respect of the first through hole and the rotator 200 can rotate in respect of the second through hole. The first through hole is perpendicular to the second through hole, and vice versa. This case is shown in Fig. 2.

Fig. 2 also shows an opening 124 through which a signal cable from an electric load cell 106 can be arranged. Usually a lid (not shown) is arranged over the opening 124 to protect the opening. At the lid or inside the lid a processing and/or a communication device (not shown) is arranged. The processing and/or communication device can receive the weight signal from the electrical load cell 106 and process it directly or relay the original weight signal or as an amplified weight signal to a control device (not shown). The control device can be arranged in a vehicle, such as a forwarder or a tree harvester. The control device can compute the weight based on the weight signal and provide the computed weight to an operator and/or as input to other processes.

The communication between the control device and the processing and/or communication device can be performed in a number of different ways by using known communication techniques. Two main communication methods are the use of wireless or wired communication technologies. These two different communication technologies can also be combined herein. The specific communication protocols and interfaces used for mentioned communication are outside of the scope of the present disclosure.

Fig. 2 further illustrates an axial direction A of the weighing link 100 and a direction perpendicular to the axial direction which herein is denoted the radial direction R of the weighing link 100. Mentioned radial direction R is not limited to cylindric geometries but also applies to weighing links having e.g. cubic and rectangular geometries.

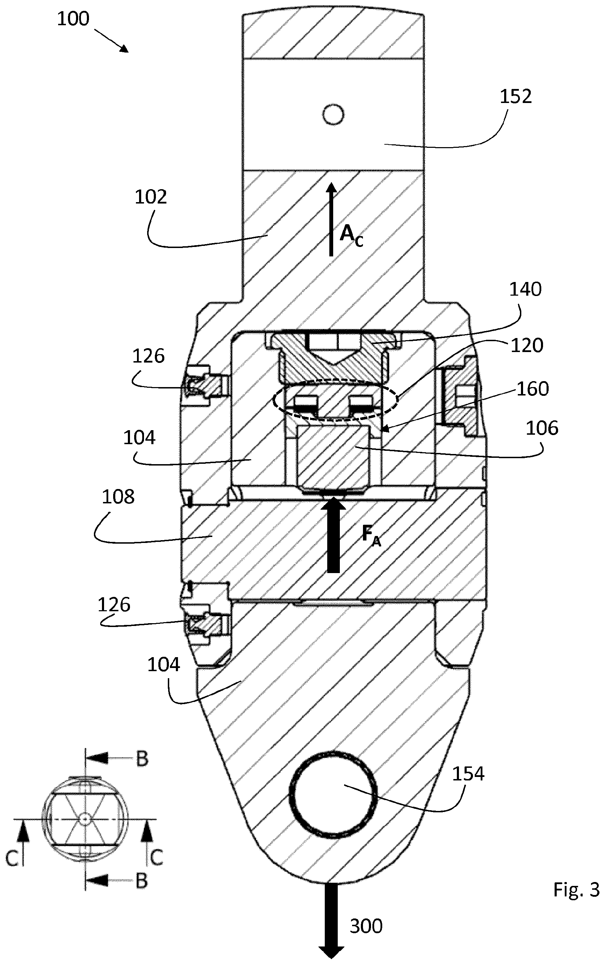

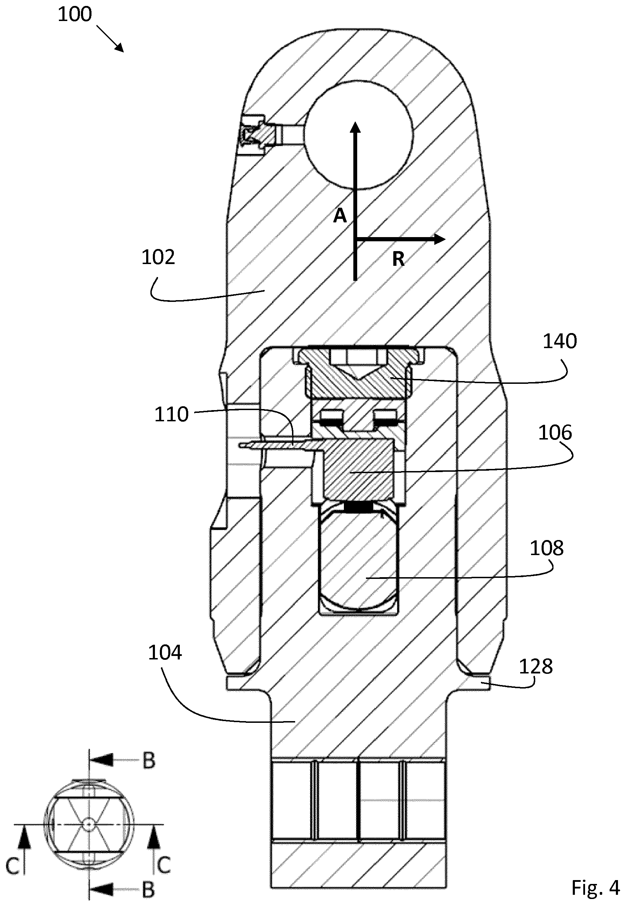

Fig. 3 shows a first cross-section view of a weighing link 100 according to an embodiment of the invention from a B-B cut view. The weighing link 100 comprises a first part 102 and a second part 104. The second part 104 is movable inside the first part 102 in an axial direction A of the weighing link 100 (see also Fig. 4). An electric load cell 106 is arranged inside the weighing link 100 between the first part 102 and the second part 104 as shown in Fig. 3. Further, pressure means 108 is in mechanical contact with the electric load cell 106. The pressure means 108 is rigidly attached to the first part 102 and movably attached to the second part 104. This means that the pressure means 108 will exercise or transfer an axial force F_{A} onto the electric load cell 106 when a load 300 is applied to the second part 104 of the weighing link 100.

There exist different types of rotators, such as electric and hydraulic rotators. The invention herein is not limited to specific types of rotators and therefore the weighing link 100 can be attached to any types of rotators within the scope of the appended claims. The same applies to the types of crane arms which can be used together with the weighing link 100 according to the invention.

When a load is applied to the second part 104, the second part 104 will slide axially inside the first part 102 while the pressure means 108 will follow the first part 102 and therefore act a force on the electric load cell 106. As the second part 104 is moveable or slidably arranged inside the first part 102 in the axial direction A only and hence the force of the pressure means 108 acting on the electric load cell 106 will only relate to the axial force and not to a bending force or any other irrelevant or distorting forces for determining the weight based on the applied load. The axial force F_{A} will be dependent on or proportional to the applied load 300.

The pressure means 108 may be removably arranged inside the weighing link 100 so that the pressure means 108 can be removed e.g. at service of the weighing link 100. In Fig. 3 the pressure means 108 extends in a direction perpendicular to the axial direction A of the weighing link 100. More specifically the pressure means 108 extends in the radial direction R of the weighing link 100 through the first part 102 and the second part 104, respectively. In one exemplary configuration the pressure means 108 has the form or shape of a pin with cylindrical ends and a rectangular or cubic inner sleeve arranged between the cylindrical ends of the pressure means 108. The cylindrical ends fit into corresponding cylindrical holes of the first part 102. With this configuration the pressure means 108 will hold the first 102 and second 104 parts together and will also block the possibility of the first part 102 rotating relative to the second part 104, and vice versa.

In an embodiment of the invention as shown in Fig. 3, the electric load cell 106 is aligned with a central axis A_{C} of the weighing link 100. This means that the electric load cell 106 in this case is symmetrically arranged around the center axis A_{C} of the weighing link 100.

It is also noted in Fig. 3 that the electric load cell 106 is arranged in a cavity 160 formed between the first part 102 and the second part 104. Over the electric load cell 106 a biasing device 120 can be arranged for biasing the electric load cell 106 inside the weighing link 100 so that the electric load cell 106 is securely held in its position in the cavity 160. According to an embodiment, the biasing device 120 is arranged on the opposite side in the axial direction A of the electric load cell 106 in relation to the pressure means 108 which is also shown in Fig. 3. It is however noted that the biasing device 120 can be arranged on the same side in the axial direction A of the electric load cell 106 in relation to the pressure means 108. The biasing device 120 can comprises at least one spring 122 arranged to act in the axial direction A of the weighing link 100 onto the electric load cell 106. In Fig. 3 two springs, marked as block rectangles, acts onto the electric load cell 106.

Furthermore, over the biasing device 120 a removable plug 140 can be arranged/located. The plug 140 can be threaded so that the plug easily can be removed and re-mounted at the weighing link 100. After mounting of the electric load cell 106, possibly with the biasing device 120 in the cavity 160, the plug 149 is mounted. The plug 140 is also arranged to act as a counterstay for the pressure means 108, and hence the plug 140 abuts the first housing 132 and the first part 102. Also, in Fig. 3 a plural of lubricant nipples 126 are shown for lubrication of different mechanical parts of the weighing link 100.

Fig. 4 shows a second cross-section view of the weighing link 100 shown in Fig. 3 from a C-C cut view which is rotated 90 degrees with respect to the B-B cut view. It is seen in this view how the second part 104 is axially movable in the first part 102. The second part 104 also comprises heels 128 which act as stops so as to limit the axial movement of the second part 104 in the first part 102 in a bottom position. The heels 128 can be circumferentially arranged on the second part 104 and forms a border between the section of the second part 104 that is axially movable inside the first part 102 and the section of the second part 104 that is not axially movable inside the first part 102.

Also shown in Fig. 4 is a signal wire 110 extending from the electric load cell 106 outwards in the radial direction R of the weighing link 100 through an opening which is shown in Fig. 2 and discussed previously.

There are many different types of electric load cells. The electric load cell 106 is arranged to create an electrical signal whose magnitude is proportional to the force which is measured. Strain gauge load cell is a common type of electric load cell 106 and can e.g. comprise four strain gauges in a Wheatstone bridge (quarter and half bridges are also possible). The electrical signal generated by the electric load cell 106 is often in the order of millivolts mV and therefore requires amplification. The electric load cell 106 can have many different shapes. Common shapes are cylindric, cubic, rectangular and S-shaped. The weight can be determined based on the electrical signal generated by the electric load cell 106.

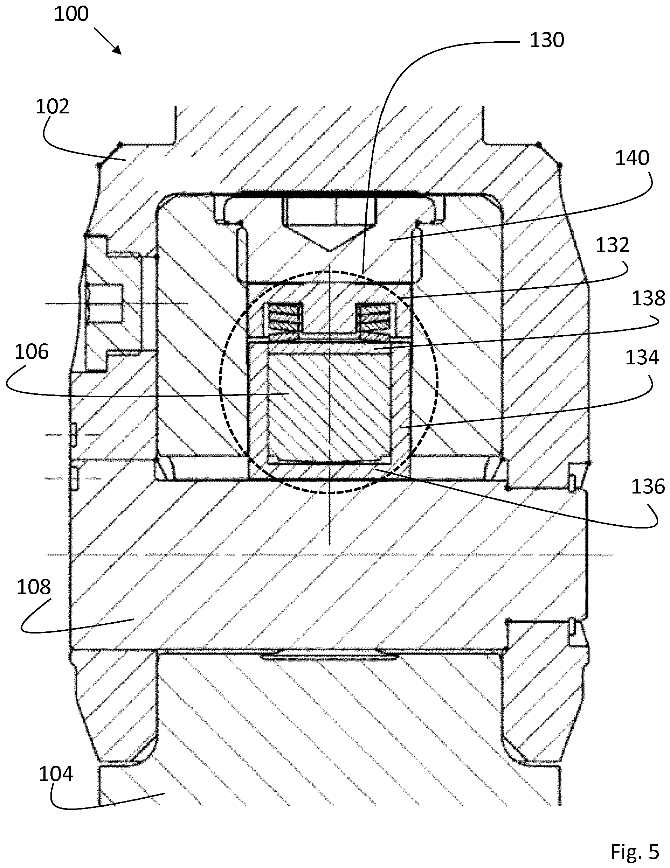

Fig. 5 shows a close-up view of a weighing link 100 according to an embodiment of the invention. An overloading protection device 130 is shown in Fig. 5. The purpose or function of the overloading protection device 130 is to protect the electric load cell 106 from a mechanical overload applied on the second part 104 which can mechanically damage or break the electric load cell 106.

In an embodiment of the invention, the overloading protection device 130 comprises at least one housing 132; 134 abutting the pressure means 108 when the applied load 300 is larger than a threshold load value. The at least one housing can house the electric load cell 106.

In an embodiment of the invention, the overloading protection device 130 comprises a first housing 132 and a second housing 134. The second housing 134 houses the electrical load cell 106 as shown in Fig. 5. When the applied load 300 is larger than a threshold load value the first housing 132 and the second housing 134 will abut against each other and the applied force will hence not act on the electric load cell 106 but will instead be transferred over the first 132 and second 134 housings. As shown in Fig. 5 the removable plug 140 will abut the first housing 132 and the first part 102. The threshold load value can be determined so as to suit the application of the weighing link 100, e.g. tolerated load intervals. In an embodiment, the threshold load value can be determined in dependence on a plurality of springs 170 arranged to act in the axial direction A of the weighing link 100 and being arranged in the first housing 132. The spring arrangement can comprise one or more stacks of springs. By selecting the spring force of the plurality of springs the threshold load value can be determined or designed. The plurality of springs can be symmetrically arranged in the first housing 132 for even transfer of the spring force.

Furthermore, as shown in Fig. 5 the second housing 134 can comprises a bottom/base 136 and/or a lid 138. The bottom 136 is in mechanical contact with the pressure means 108 and will protect the electrical load cell 106 and distribute the force applied by the pressure means 108. The bottom can have chamfering on its edges that corresponds to chamfering on the pressure means 108. This would make it easier to insert the pressure means 108 into the first 102 and second parts 104 at mounting and service of the weighing link.

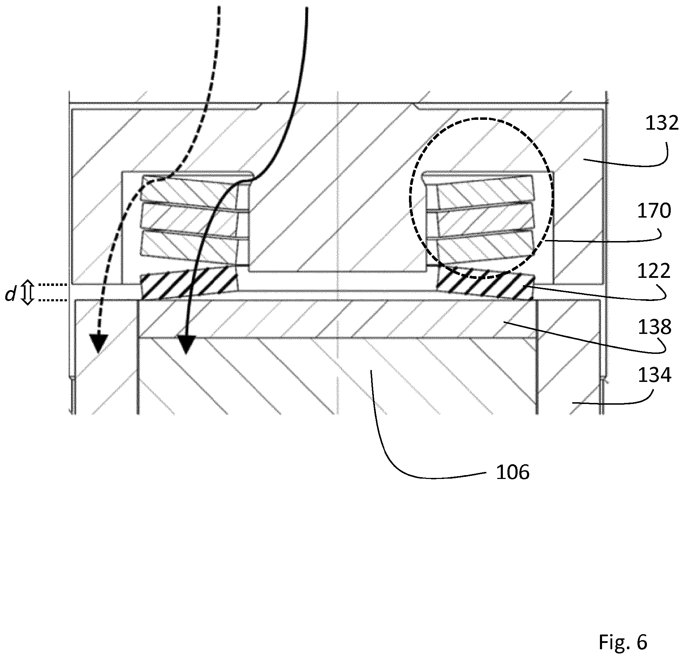

The purpose of the lid 138 is to distribute the spring force of one or more biasing springs over a larger area so as to protect the electric load cell 106. The lid also makes mounting of the electric load cell 106 easier and will protect the electric load cell 106 from dirt and corrosion. Fig. 6 illustrates the functioning of an overload protection device 130 according to an embodiment of the invention. In the embodiment shown in Fig. 6 the weighing link 100 comprises both a biasing device 130 and an overloading device 120, hence springs 122 of the biasing device 120 is shown together with springs 170 of the overloading device 130. The springs 170 of the overloading device 130 are stacked and aligned with the spring 122 of the biasing device 120 in the axial direction. When the applied load 300 is lower than a threshold load value the load is transferred over the stacked springs 170 of the overloading device 130 as illustrated with the right arrow in Fig. 6. The gap between the first 132 and second 134 housings illustrated with the double arrow and denoted d in Fig. 6 will hence be larger than zero. However, if the applied load 300 exceeds the threshold load value, the stacked springs 170 will bottom which means that the first 132 and second 134 housings will abut each other, i.e. the gap *d* will hence be zero (not shown in Fig. 6), and the load will instead be transferred as illustrated with the dashed arrow, i.e. via the walls of the first 132 and second 134 housings. When the applied load 300 once again is below the threshold load value, the load will be transferred via the stacked springs 170. It is to be noted when no load is applied to the second part 104 the weighing link 100 will take its no-loaded position. Said no-loaded position can be a calibrated position e.g. calibrated to the weight of a rotator 200 and a tool 700. If the rotator 200 and/or the tool 700 are switched to other rotators 200 and/or tools 700 the weighing link 100 is recalibrated.

Finally, it should be understood that the invention is not limited to the embodiments described above, but also relates to and incorporates all embodiments within the scope of the appended independent claims.

## Claims

1. A weighing link (100) for a rotator (200), the weighing link (100) comprising
a first part (102) and a second part (104), wherein the second part (104) is movable inside the first part (102) in an axial direction (A) of the weighing link (100);
an electric load cell (106) arranged inside the weighing link (100) between the first part (102) and the second part (104); and
a pressure means (108) in mechanical contact with the electric load cell (106), wherein the pressure means (108) is rigidly attached to the first part (102) and movably attached to the second part (104) so that the pressure means (108) exercise an axial force (F_{A}) onto the electric load cell (106) when a load (300) is applied to the second part (104).

2. The weighing link (100) according to claim 1, wherein the electric load cell (106) is arranged inside a cavity (160) formed between the first part (102) and the second part (104).

3. The weighing link (100) according to claim 1 or 2, wherein the pressure means (108) extends in a direction perpendicular to the axial direction (A) of the weighing link (100).

4. The weighing link (100) according to claim 3, wherein the direction perpendicular to the axial direction (A) is the radial direction (R) of the weighing link (100), and wherein the pressure means (108) extends in the radial direction (R) through the first part (102) and the second part (104), respectively.

5. The weighing link (100) according to any of the preceding claims, further comprising a biasing device (120) for biasing the electric load cell (106) inside the weighing link (100).

6. The weighing link (100) according to claim 5, wherein the biasing device (120) is arranged on the opposite side in the axial direction (A) of the electric load cell (106) in relation to the pressure means (108).

7. The weighing link (100) according to claim 6, wherein the biasing device (120) comprises at least one spring (122) arranged to act in the axial direction (A) of the weighing link (100).

8. The weighing link (100) according to any of the proceeding claims, further comprising an overloading protection device (130) arranged at the electric load cell (106) for protecting the electric load cell (106) from an overload applied to the second part (104).

9. The weighing link (100) according to claim 8, wherein the overloading protection device (130) comprises at least one housing (132; 134) abutting the pressure means (108) when the applied load (300) is larger than a threshold load value.

10. The weighing link (100) according to claim 8 or 9, wherein the overloading protection device (130) comprises a first housing (132) and a second housing (134), and wherein the first housing (132) and the second housing (134) abut against each other when the applied load (300) is larger than a threshold load value.

11. The weighing link (100) according to claim 10, wherein the first housing (132) comprises a plurality of springs (170) arranged to act in the axial direction (A) of the weighing link (100).

12. The weighing link (100) according to claim 10 or 11, further comprising a removable plug (140) abutting the first housing (132) and the first part (102).

13. The weighing link (100) according to any of claims 10 to 12, wherein the second housing (134) comprises at least one of a bottom (136) and a lid (138), wherein the bottom (136) is in mechanical contact with the pressure means (108).

14. The weighing link (100) according to any of the proceeding claims,
wherein the electric load cell (106) is connected to a signal wire (110) extending from the electric load cell (106) outwards in the radial direction (R) of the weighing link (100); and/or
wherein the electric load cell (106) is aligned with a central axis of the weighing link (100); and/or
wherein the axial force (F_{A}) is proportional to the applied load (300).

15. The weighing link (100) according to any of the proceeding claims, wherein
the first part (102) comprises a first attaching means (152) arranged to attach the weighing link (100) to a crane arm (400), and
the second part (104) comprises a second attaching means (154) arranged to attach the weighing link (100) to a rotator (200).
